# EUROPEAN PATENT APPLICATION

(11) **EP 4 383 176 A1**
(43) Date of publication of application: **12.06.2024**
(21) Application number: 23193872.1
(22) Date of filing: 29.08.2023
(51) Int. Cl.: G06Q 30/0201, G06V 20/52, G08B 13/196

(54) **INFORMATION PROCESSING PROGRAM, INFORMATION PROCESSING METHOD, AND INFORMATION PROCESSING DEVICE**

(30) Priority: 09.12.2022 JP 2022197189
(71) Applicant: FUJITSU LIMITED, Kawasaki-shi, Kanagawa 211-8588 (JP)
(72) Inventor: ENDO, Arisu, Kawasaki-shi, Kanagawa, 211-8588 (JP); TOGAWA, Taro, Kawasaki-shi, Kanagawa, 211-8588 (JP); KOHATA, Shun, Kawasaki-shi, Kanagawa, 211-8588 (JP)
(74) Representative: Hoffmann Eitle

(57) **Abstract**

An information processing program causes a computer to execute a process including obtaining a video in which inside of a store is captured analyzing the obtained video identifying, based on a result of the analyzing, a first-type region that covers a product placed inside the store captured in the video, a second-type region that covers a person targeted for selling the product inside the store captured in the video, and a relationship that recognizes interaction between the first-type region and the second-type region and associating the identified relationship to the product covered in the first-type region.

## Description

### FIELD

The embodiments discussed herein are related to a computer-readable recording medium.

### BACKGROUND

When a manufacturer develops a new product, understanding the customer evaluation about that product is an important factor. In that regard, for example, before launching a product to the market on a full scale, the manufacturer carries out test marketing in the form of a sales test or a questionnaire survey and obtains customer evaluation.

As a result of carrying out test marketing, if a positive response about the product can be confirmed from the customers, then the manufacturer becomes able to sell the product extensively. On the other hand, if the customer response about the product is negative, then the manufacturer can take measures such as making improvements in the product and again carrying out test marketing, or stopping the sale of the product.

For example, related arts are disclosed in [Patent Literature 1] Laid-open Patent Publication No. 2022-165483.

However, in the conventional technology mentioned above, identifying the customer evaluation about a product is a difficult task.

For example, a customer showing interest in a product does not necessarily result in the customer purchasing that product. Moreover, there are also times when a customer becomes interested in a product only after actually seeing it. However, in the conventional technology, such products in which the customers have shown interest are evaluated in an appropriate manner.

Accordingly, it is an object in one aspect of an embodiment of the present invention to provide a computer-readable recording medium, an information processing method, and information processing device that enable identifying the evaluation of a customer about a product.

### SUMMARY

According to an aspect of an embodiment, an information processing program causes a computer to execute a process includes obtaining a video in which inside of a store is captured analyzing the obtained video identifying, based on a result of the analyzing, a first-type region that covers a product placed inside the store captured in the video, a second-type region that covers a person targeted for selling the product inside the store captured in the video, and a relationship that recognizes interaction between the first-type region and the second-type region and associating the identified relationship to the product covered in the first-type region.

### BRIEF DESCRIPTION OF DRAWINGS

FIG. 1 is a diagram illustrating an exemplary system according to a first embodiment;
FIG. 2 is a diagram for explaining the operations performed in an information processing device according to the first embodiment;
FIG. 3 is a diagram for explaining the machine learning of a HOID model;
FIG. 4 is a functional block diagram illustrating a configuration of the information processing device according to the first embodiment;
FIG. 5 is a diagram illustrating an exemplary data structure of a product information table according to the first embodiment;
FIG. 6 is a flowchart for explaining a flow of operations performed in the information processing device according to the first embodiment;
FIG. 7 is a functional block diagram illustrating a configuration of an information processing device according to a second embodiment;
FIG. 8 is a diagram illustrating an exemplary data structure of a product information table according to the second embodiment;
FIG. 9 is a diagram illustrating an exemplary data structure of rule information;
FIG. 10 is a flowchart for explaining a flow of operations performed in the information processing device according to the second embodiment;
FIG. 11 is a diagram for explaining an exemplary human body model;
FIG. 12 is a diagram illustrating an example of joint names;
   and
FIG. 13 is a diagram illustrating an exemplary hardware configuration of a computer that implements identical functions to the information processing devices according to the embodiments.

### DESCRIPTION OF EMBODIMENTS

Preferred embodiments of the present invention will be explained with reference to accompanying drawings. However, the present invention is not limited by the embodiments described below.

### (a) First Embodiment

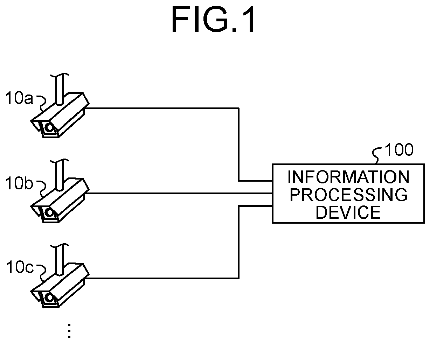

FIG. 1 is a diagram illustrating an exemplary system according to a first embodiment. As illustrated in FIG. 1, the system includes cameras 10a, 10b, and 10c and includes an information processing device 100. The cameras 10a, 10b, and 10c are connected to the information processing device 100 via a network. In FIG. 1, for explanatory convenience, only the cameras 10a to 10c are illustrated. However, the system according to the first embodiment can include other cameras too.

The cameras 10a to 10c are installed at predetermined positions inside a store. Moreover, in the store, a plurality of products is arranged. Herein, the installation positions (coordinates) of the cameras 10a to 10c are assumed to be mutually different. In the following explanation, when the cameras 10a to 10c need not be particularly differentiated from each other, they are referred to as the "cameras 10".

Each camera 10 captures a video inside the store and sends the data of the captured video to the information processing device 100. In the following explanation, the data of a video as sent by each camera 10 to the information processing device 100 is referred to as "video data".

The video data contains a plurality of time-series video frames. The video frames are assigned with frame numbers in ascending chronological order. A single image frame represents a still image taken by the camera 10 at a particular timing. Thus, each image frame can also have timing data assigned thereto. Moreover, in each set of video data, camera identification information is set for enabling identification of the camera 10 that obtained the concerned set of video data.

The information processing device 100 obtains a set of video data of the inside of the store; analyzes the obtained set of video data; and identifies a first-type region that covers a product placed in the store, identifies a second-type region that covers the customer targeted for selling the product, and identifies the relationship that recognizes the interaction between the first-type region and the second-type region. Then, the information processing device 100 associates the identified relationship to the product covered in the first-type region. As a result, information about the correspondence relationship between the product and the relationship can be generated as the information effective in evaluating the product.

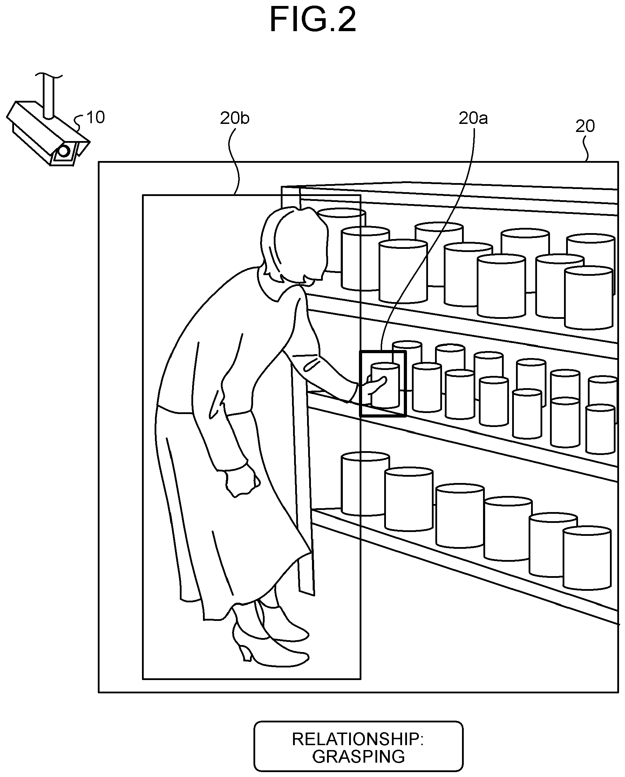

FIG. 2 is a diagram for explaining the operations performed in the information processing device according to the first embodiment. For example, the information processing device 100 analyzes video data 20 taken by the camera 10 and identifies the following: a first-type region 20a that covers a product; a second-type region that covers the customer targeted for selling the product; and the relationship between the first-type region 20a and a second-type region 20b. In the example illustrated in FIG. 2, it is assumed that the relationship between the first-type region 20a and the second-type region 20b indicates "grasping". In that case, the information processing device 100 associates the identified relationship indicating "grasping" to the product covered in the first-type region 20a. For example, the information processing device 100 performs the abovementioned operations in a repeated manner; and, if the product covered in the first-type region 20a has the relationship indicating "grasping" associated thereto for a plurality of customers, then that particular product can be evaluated to be a product that attracted interest of the customers.

With reference to FIG. 2, the explanation is given about an example in which the relationship between the first-type region and the second-type region indicates "grasping". Other than that, there can be other types of relationship such as "looking", "touching", and "sitting".

The information processing device 100 implements a HOID (Human Object Interaction Detection) model and identifies the first-type region covering a product, a second-type region covering the customer targeted for selling the product, and the relationship between the first-type region and the second-type region. The information processing device 100 inputs video data (time-series video frames) to the HOID model, so that the information about the first-type region, the second-type region, and the relationship is output.

Given below is the explanation of an example of a learning operation performed according to a HOID model in the information processing device 100. The information processing device 100 trains a HOID model in which a plurality of sets of training data is used for identifying a first-type class indicating a person, a second-type class indicating an object, and the relationship between the first-type class and the second-type class.

Each set of training data contains image data (an image frame) representing input data, and contains correct solution information that is set with respect to the image data.

In the correct solution information, the following information is set: a class indicating a person and an object to be detected; a class indicating the interaction between a person and an object; and a bounding box (Bbox) indicating the region of each class. For example, the following information is set as the correct solution information: region information of a "something" class indicating an object; region information of a "person" class indicating the user; and the relationship indicating the interaction between the "something" class and the "person" class.

Meanwhile, in the training data too, a plurality of classes and a plurality of interactions can be set, and the already-trained HOID model can recognize a plurality of classes and a plurality of interactions.

Generally, if the "something" class is created according to the commonly-used object recognition, then all such things which are unrelated to the task, such as the background, clothing, and small objects, also get detected. Moreover, since all of them indicate "something", a large number of bounding boxes get recognized in the image data, but nothing can be comprehended. In the case of implementing a HOID model, it can be understood that a person has a particular relationship with an object (or can be some other relationship such as grasping, sitting, and operating), and hence that relationship can be used as meaningful information in a task.

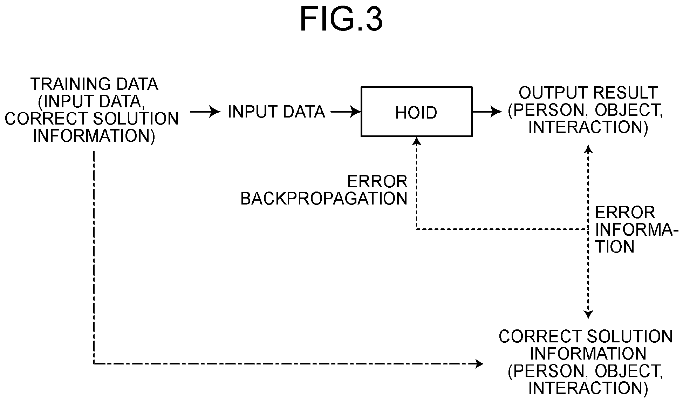

FIG. 3 is a diagram for explaining the machine learning of a HOID model. As illustrated in FIG. 3, the information processing device 100 inputs the training data as the input data to a HOID model, and obtains the output result from the HOID model. The output result includes: a class of a person detected in the HOID model, a class of an object detected in the HOID model, and the interaction between the person and the object. Then, the information processing device 100 calculates error information between the correct solution information of the training data and the output result of HOID model, and implements machine learning of the HOID model using error backpropagation so as to reduce the error.

Given below is the explanation of an exemplary identification operation in which a HOID model is implemented. The information processing device 100 inputs each image frame of the video data, which is captured by the camera 10, to a HOID model, and obtains the output result from the HOID model. The output result from the HOID model includes: a person Bbox; an object Bbox; the probability value of the interaction between the person and the object (the probability value of each relationship); and the class names. A person Bbox corresponds to the first-type region explained earlier. The object Bbox corresponds to the second-type region explained earlier. Based on the output result from HOID model, the information processing device 100 identifies the relationship. For example, the information processing device 100 identifies the relationship having the highest probability value as the relationship between the first-type region and the second-type region.

As explained above, as a result of inputting the video data to the HOID model, the information processing device 100 becomes able to identify the first-type region, the second-type region, and the relationship. Meanwhile, the information processing device 100 can store an already-machine-learned HOID model in advance in a memory unit, and can identify the first-type region, the second-type region, and the relationship using the stored HOID model.

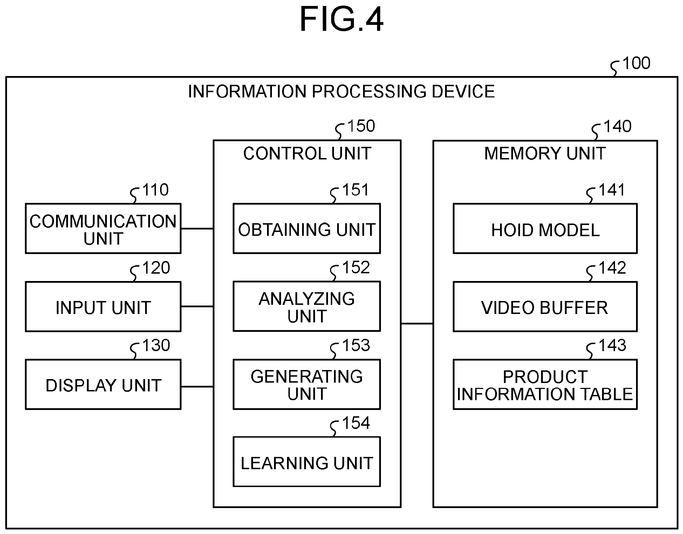

Given below is the explanation of an exemplary configuration of the information processing device 100 that performs the operations as illustrated in FIG. 2. FIG. 4 is a functional block diagram illustrating a configuration of the information processing device according to the first embodiment. As illustrated in FIG. 4, the information processing device 100 includes a communication unit 110, an input unit 120, a display unit 130, a memory unit 140, and a control unit 150.

The communication unit 110 performs data communication with the cameras 10 and external devices via a network. The communication unit 110 is a network interface card (NIC). For example, the communication unit 110 receives video data from the cameras 10.

The input unit 120 is an input device used for inputting a variety of information to the control unit 150 of the information processing device 100. For example, the input unit 120 corresponds to a keyboard, a mouse, or a touch-sensitive panel.

The display unit 130 is a display device used to display the information output from the control unit 150. For example, the display unit 130 is used to display product information (explained later). In the product information, the information about a product, which is covered in the first-type region, is associated to a relationship.

The memory unit 140 is used to store a HOID model 141, a video buffer 142, and a product information table 143. The memory unit 140 is a storage device such as a memory.

The HOID model 141 represents the HOID model explained with reference to FIG. 3. When an image frame of video data is input to the HOID model 141; the first-type region in the image frame, the second-type region in the image frame, and the relationship between the first-type region and the second-type region are output.

The video buffer 142 is used to store the video data captured by each camera 10. For example, in the video buffer 142, the video data is stored in a corresponding manner to camera identification information.

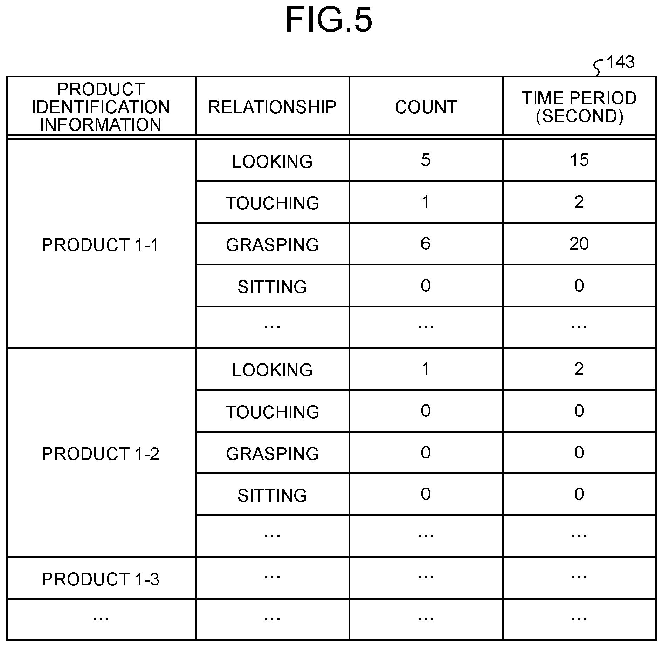

The product information table 143 is used to store information related to each product covered in the first-type region. FIG. 5 is a diagram illustrating an exemplary data structure of a product information table according to the first embodiment. As illustrated in FIG. 5, in the product information table 143, the following items are held in a corresponding manner: product identification information, relationship, count, and time period.

The item "product identification information" enables identification of a product. The item "relationship" indicates the relationship between the first-type region covering the concerned product and the second-type region. The item "count" indicates the number of times for which the concerned relationship is determined to have been established. The count has the initial value of "0 (times)". The item "time period" indicates the period of time for which the concerned relationship was established. The time period has the initial value of "0 (s)".

For example, with reference to FIG. 5, regarding product identification information indicating "product 1-1", a relationship indicating "looking" has the count of "5" and the time period of "15" corresponding thereto. Moreover, regarding the product identification information indicating "product 1-1", a relationship indicating "touching" has the count of "1" and the time period of "2" corresponding thereto. Furthermore, regarding the product identification information indicating "product 1-1", a relationship indicating "grasping" has the count of "6" and the time period of "20" corresponding thereto. Moreover, regarding the product identification information indicating "product 1-1", a relationship indicating "sitting" has the count of "0" and the time period of "0" corresponding thereto.

In the example illustrated in FIG. 5, "looking", "touching", "grasping", and "sitting" indicate the types of relationship. However, other types of relationship can also be included.

Returning to the explanation with reference to FIG. 4, the control unit 150 includes an obtaining unit 151, an analyzing unit 152, a generating unit 153, and a learning unit 154. The control unit 150 is a central processing unit (CPU) or a graphics processing unit (GPU).

The obtaining unit 151 obtains video data from each camera 10. As explained earlier, in the video data, the camera identification information of the camera 10 that captured the video data is set. Thus, the obtaining unit 151 stores, in the video buffer 142, the video data in a corresponding manner to the camera identification information.

The analyzing unit 152 obtains the video data from the video buffer 142; analyzes the video data; and identifies the first-type region, the second-type region, and the relationship. For example, the analyzing unit 152 inputs time-series image frames, which are included in the video data, to the HOID model 141; and identifies the first-type region, the second-type region, and the relationship in each image frame.

The analyzing unit 152 identifies the product covered in the first-type region and identifies the person covered in the second-type region. For example, based on the output result obtained by the HOID model 141, the analyzing unit 152 identifies the product covered in the first-type region. Alternatively, the analyzing unit 152 can use an already-trained learning model that treats the region of an image frame as the input and treats the identification information of the product covered in the first-type region (i.e., the product identification information) as the output; and can identify the product covered in the first-type region. Moreover, the analyzing unit 152 assigns a unique personal identification number to the person covered in the second-type region. The analyzing unit 152 tracks each person who is covered in the second-type region, and sets the same personal identification number to the same person. Herein, the information enabling identification of a person (customer) is referred to as "personal identification information".

The analyzing unit 152 performs the abovementioned operations in a repeated manner; and, for each time-series image frame, identifies the product identification information of the product covered in the first-type region, identifies the personal identification information of the person covered in the second-type region, and identifies the relationship. Based on the result of identification, the analyzing unit 152 updates that record in the product information table 143 which corresponds to the product identification information.

For example, regarding the product covered in the first-type region of each image frame from among the image frames having a frame number N to a frame number N+10, assume that the analyzing unit 152 identifies the product identification information indicating "product 1-1" and identifies the relationship indicating "looking". Moreover, regarding the product covered in the first-type region of each image frame from among the image frames having a frame number N+11 to a frame number N+20, assume that the analyzing unit 152 identifies the relationship indicating "touching".

In that case, in a product information table 243, the analyzing unit 152 increments by one the count corresponding to the relationships "looking" and "touching" for the product identification information indicating "product 1-1". Meanwhile, if the same relationship is identified in successive image frames, then the analyzing unit 152 assumes that the concerned relationship was established only once and performs operations accordingly.

Moreover, regarding the relationship corresponding to the pair of the same product identification information and the same personal identification information, even if the same relationship is identified for any number of times, the analyzing unit 152 can assume that the relationship was established only once. For example, within a predetermined period of time, if a person B covered in the second-type region touches a product A, which is covered in the first-type region, for any number of times, the analyzing unit 152 increments, only by one, the count corresponding to the relationship indicating "touching" for the product A. As a result of performing such operations, the analyzing unit 152 becomes able to treat the count of the relationship registered in the product information table 143 as the headcount of the persons having that same relationship with the product.

Furthermore, the analyzing unit 152 adds the time period corresponding to the image frames having the frame number N to the frame number N+1 to the time period corresponding to the relationship indicating "looking" regarding the product identification information indicating "product 1-1". Similarly, the analyzing unit 152 adds the time period corresponding to the image frames having the frame number N+11 to the frame number N+20 to the time period corresponding to the relationship indicating "touching" regarding the product identification information indicating "product 1-1".

Based on the product information table 143, the generating unit 153 generates, for each set of product identification information, the product information in which the relationship type, the count, and the time period are held in a corresponding manner. Then, the generating unit 153 outputs the generated product information to the display unit 130 for display purposes.

Alternatively, based on the product information table 143, for each set of product identification information, the generating unit 153 can generate product information in which the relationship type and the count are held in a corresponding manner and separately generate product information in which the relationship type and the time period are held in a corresponding manner; and can output the sets of product information to the display unit 130 for display purposes.

The learning unit 154 performs machine learning of the HOID model 141 based on a plurality of sets of training data. The learning unit 154 obtains a plurality of sets of training data in advance. The learning unit 154 inputs the training data to the HOID model 141; calculates error information between the correct solution information of the training data and the output result from the HOID model 141; and implements machine learning of the HOID model 141 using error backpropagation so as to reduce the error. The explanation about the remaining machining learning is same as the explanation given earlier with reference to FIG. 3.

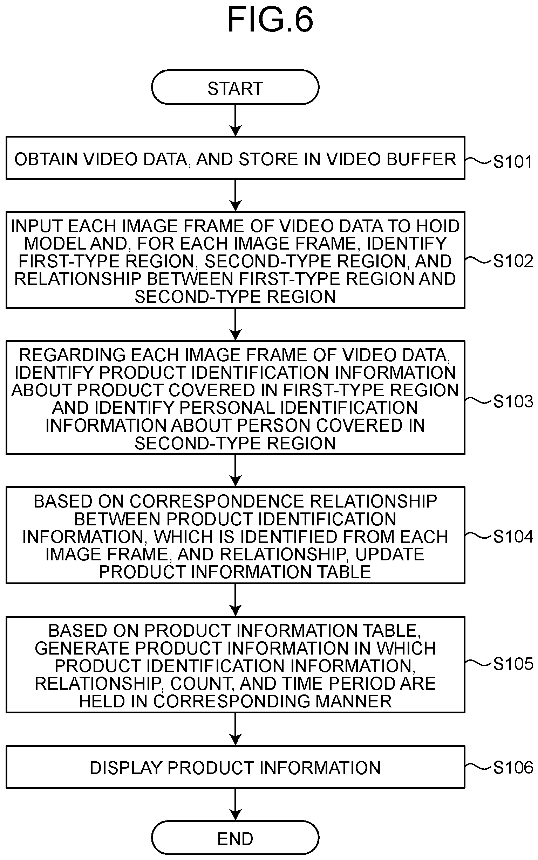

Given below is the explanation of an exemplary flow of operations performed in the information processing device 100 according to the first embodiment. FIG. 6 is a flowchart for explaining a flow of operations performed in the information processing device according to the first embodiment. As illustrated in FIG. 6, the obtaining unit 151 of the information processing device 100 obtains video data from each camera 10 and stores the video data in the video buffer 142 (Step S101).

The analyzing unit 152 of the information processing device 100 inputs each image frame of the video data to the HOID model 141 and, for each image frame, identifies the first-type region, the second-type region, and the relationship between the first-type region and the second-type region (Step S102).

Regarding each image frame of the video data, the analyzing unit 152 identifies the product identification information about the product covered in the first-type region and identifies the personal identification information about the person covered in the second-type region (Step S103). Then, based on the correspondence relationship between the product identification information, which is identified from each image frame, and the relationship; the analyzing unit 152 updates the product information table 143 (Step S104).

Based on the product information table 143, the generating unit 153 generates product information in which the product identification information, the relationship, the count, and the time period are held in a corresponding manner (Step S105). Then, the generating unit 153 outputs the product information to the display unit 130 for display purposes (Step S106).

Given below is the explanation about the effects achieved in the information processing device 100 according to the first embodiment. The information processing device 100 obtains the video data of the inside of a store; analyzes the obtained video data; and identifies a first-type region that covers a product placed in the store, identifies a second-type region that covers the customer targeted for selling that product, and identifies the relationship recognizing the interaction between the first-type region and the second-type region. Then, the information processing device 100 holds the identified relationship in a corresponding manner to the product covered in the first-type region. As a result, information about the correspondence relationship between the product and the relationship can be generated as effective information in evaluating the product.

The information processing device 100 repeatedly performs the operations of analyzing the video data; identifying the person (customer); and identifying the first-type region, the second-type region, and the relationship. Then, for each relationship type, the information processing device 100 generates product information in which the count for that relationship type is held in a corresponding manner to the information about the product covered in the first-type region; and displays the product information in the display unit 130. As a result, quantitative evaluation can be performed about what type of relationship was established with respect to a product by how many customers.

The information processing device 100 repeatedly performs the operations of analyzing the video data; identifying the person (customer); and identifying the first-type region, the second-type region, and the relationship. Then, for each product, the information processing device 100 generates product information in which each relationship is held in a corresponding manner to the time period for that relationship; and displays the product information in the display unit 130. As a result, quantitative evaluation can be performed about what type of relationship was established for what period of time.

In the case of analyzing the video data, as a result of using the already-machine-learnt HOID model 141, the information processing device 100 becomes able to appropriately identify the first-type region covering a product; the second-type region covering a person; and the relationship between the first-type region and the second-type region.

### (b) Second embodiment

Given below is the explanation of an information processing device according to a second embodiment. A system according to the second embodiment has an identical configuration to the configuration of the system according to the first embodiment. Hence, that explanation is not given again. The information processing device according to the second embodiment is referred to as an "information processing device 200". The information processing device 200 is connected to the cameras 10. Regarding the cameras 10, the explanation is identical to the explanation of the cameras 10 according to the first embodiment.

In an identical manner to the information processing device 100 according to the first embodiment, the information processing device 200 inputs each image frame of video data to a HOID model and identifies the first-type region, the second-type region, and the relationship in a repeated manner. Herein, based on the transition occurring in the identified relationship and based on rule information that is set in advance, the information processing device 200 identifies that section of the product which was of interest to the person (hereinafter, called the section of interest).

For example, assume that the relationship undergoes a transition from "looking" to "grasping" and assume that, in the rule information, "package design" is set as the section of interest corresponding to the transition in the relationship from "looking" to "grasping". In that case, the information processing device 200 increments by one the headcount corresponding to the section of interest of the product.

The information processing device 200 generates, for each product, product information containing the section of interest and the headcount of the persons who showed interest in the section of interest, and displays the product information in a display unit. As a result, evaluation can be performed about what part of the product is of interest to what extent.

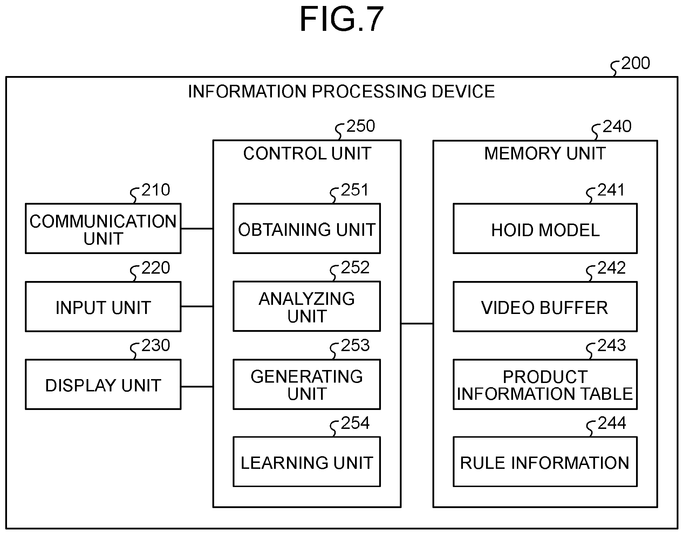

Given below is the explanation of an exemplary configuration of the information processing device 200 according to the second embodiment. FIG. 7 is a functional block diagram illustrating a configuration of the information processing device according to the second embodiment. As illustrated in FIG. 7, the information processing device 200 includes a communication unit 210, an input unit 220, a display unit 230, a memory unit 240, and a control unit 250.

Regarding the communication unit 210, the input unit 220, and the display unit 230; the explanation is identical to the explanation of the communication unit 110, the input unit 120, and the display unit 130, respectively, given earlier with reference to FIG. 4.

A memory unit 204 is used to store a HOID model 241, a video buffer 242, a product information table 243, and rule information 244. The memory unit 204 is a storage device such as a memory.

Regarding the HOID model 241 and the video buffer 242, the explanation is identical to the explanation of the HOID model 141 and the video buffer 142, respectively, according to the first embodiment.

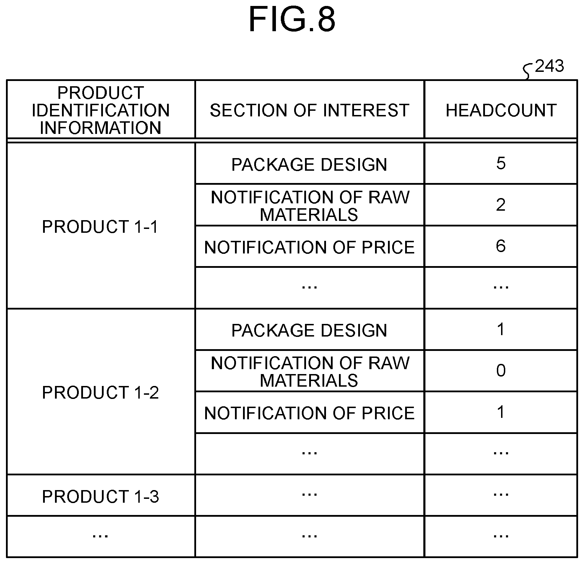

The product information table 243 is used to store information related to each product covered in the first-type region. FIG. 8 is a diagram illustrating an exemplary data structure of a product information table according to the second embodiment. As illustrated in FIG. 8, in the product information table 243, the following items are held in a corresponding manner: product identification information, section of interest, and headcount.

The item "product identification information" enables identification of a product. The item "section of interest" indicates the section of the product, which is covered in the first-type region, that is identified based on the rule information 244 and that is noticed by the person covered in the second-type region. The item "headcount" indicates the headcount of the persons who showed interest in the section of interest.

For example, with reference to FIG. 8, regarding the product identification information indicating "product 1-1", a section of interest indicating "package design" has the headcount of "5" corresponding thereto. Moreover, regarding the product identification information indicating "product 1-1", a section of interest indicating "notification of raw materials" has the headcount of "2" corresponding thereto. Furthermore, regarding the product identification information indicating "product 1-1", a section of interest indicating "notification of price" has the headcount of "6" corresponding thereto.

In the example illustrated in FIG. 8, "package design", "notification of raw materials", and "notification of price" indicate the sections of interest. However, other sections of interest can also be included.

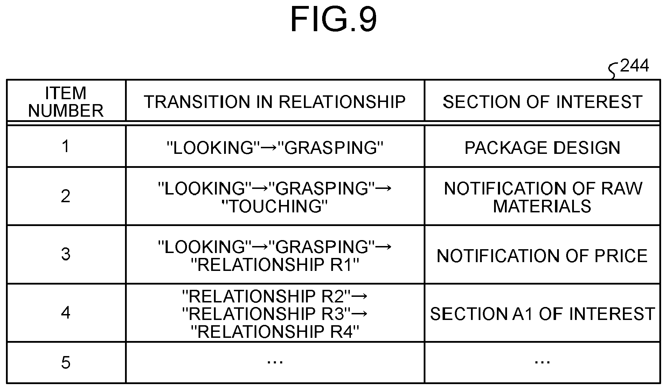

The rule information 244 defines the relationship between the transition in the relationship and the section of interest. FIG. 9 is a diagram illustrating an exemplary data structure of the rule information. As illustrated in FIG. 9, in the rule information, the following items are held in a corresponding manner: item number, transition in relationship, and section of interest. The item "item number" enables identification of each record in the rule information 244. Regarding the items "transition in relationship" and "section of interest", the explanation is identical to the explanation given earlier.

For example, in the rule information, when the transition in the relationship indicates "looking "->"grasping", the corresponding section of interest indicates "package design".

Returning to the explanation with reference to FIG. 7, the control unit 250 includes an obtaining unit 251, an analyzing unit 252, a generating unit 253, and a learning unit 254. The control unit 250 is a CPU or a GPU.

The obtaining unit 251 obtains video data from each camera 10. As explained earlier, in the video data, the camera identification information of the camera 10 that captured the video data is set. The obtaining unit 251 stores, in the video buffer 242, the video data in a corresponding manner to the camera identification information.

The analyzing unit 252 inputs time-series image frames, which are included in the video data, to the HOID model 241; and identifies the first-type region, the second-type region, and the relationship in each image frame. Then, the analyzing unit 252 identifies the product identification information about the product covered in the first-type region of each image frame. Moreover, regarding each person who is covered in the second-type region, the analyzing unit 252 sets the same personal identification number to the same person.

The analyzing unit 252 performs the abovementioned operations in a repeated manner; and, for each time-series image frame, identifies the product identification information of the product covered in the first-type region, identifies the personal identification information of the person covered in the second-type region, and identifies the relationship. Then, based on the transition in the relationship and the rule information 244, the analyzing unit 252 identifies the section of interest in which the person having the concerned personal identification information has shown interest. Based on the result of identification, the analyzing unit 252 updates that record in the product information table 243 which corresponds to the product identification information.

For example, regarding the product covered in the first-type region of each image frame from among the image frames having the frame number N to the frame number N+10, assume that the analyzing unit 252 identifies the product identification information indicating "product 1-1" and identifies the relationship indicating "looking". Moreover, regarding the product covered in the first-type region of each image frame from among the image frames having the frame number N+11 to the frame number N+20, assume that the analyzing unit 152 identifies the relationship indicating "grasping".

In that case, the analyzing unit 252 identifies "looking "->"grasping" as the transition in the relationship with respect to the product identification information indicating "product 1-1". Meanwhile, if the same relationship is identified in successive image frames, then the analyzing unit 252 assumes that there is no transition in the relationship and performs the operations accordingly.

Based on the identified transition "looking"→"grasping" of the relationship and based on the rule information 244, the analyzing unit 252 identifies "package design" as the section of interest. In that case, in the product information table 243, the analyzing unit 252 increments by one the count corresponding to the section of interest "package design" regarding the product identification information indicating "product 1-1".

Meanwhile, regarding the section of interest corresponding to the pair of the same product identification information and the same personal identification information, even if the same section of interest is identified for any number of times, the analyzing unit 252 can assume that the headcount corresponding to that section of interest remains equal to one and performs the operations accordingly.

Based on the product information table 243, the generating unit 253 generates, for each set of product identification information, the product information in which the section of interest and the headcount corresponding to that section of interest are held in a corresponding manner. Then, the generating unit 253 outputs the generated product information to the display unit 230 for display purposes.

The learning unit 254 performs machine learning of the HOID model 241 based on a plurality of sets of training data. The learning unit 254 obtains a plurality of sets of training data in advance. The learning unit 254 inputs the training data to the HOID model 241; calculates error information between the correct solution information of the training data and the output result of the HOID model 241; and implements machine learning of the HOID model 241 using error backpropagation so as to reduce the error. The explanation about the remaining machining learning is same as the explanation given earlier with reference to FIG. 3.

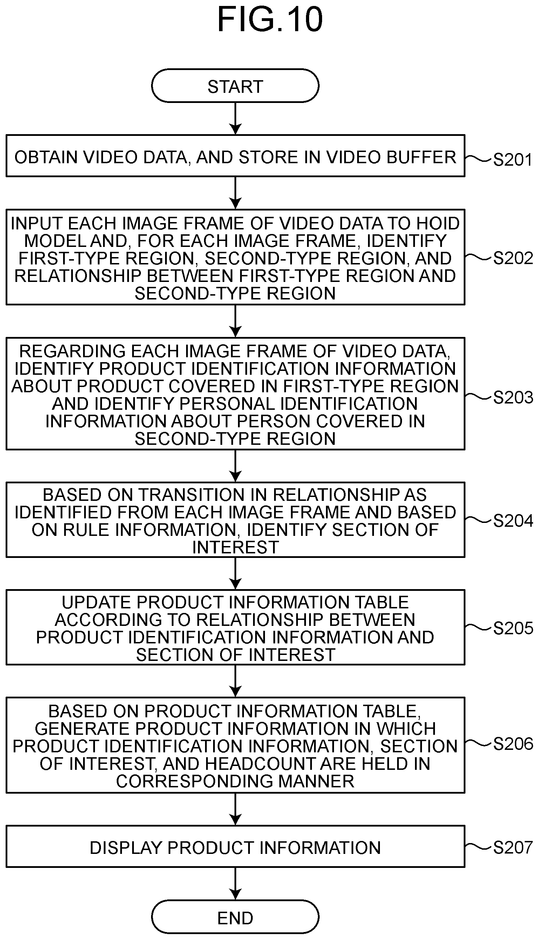

Given below is the explanation of an exemplary flow of operations performed in the information processing device 200 according to the second embodiment. FIG. 10 is a flowchart for explaining a flow of operations performed in the information processing device according to the second embodiment. As illustrated in FIG. 10, the obtaining unit 251 of the information processing device 200 obtains video data from each camera 10 and stores the video data in the video buffer 242 (Step S201).

The analyzing unit 252 of the information processing device 200 inputs each image frame of the video data to the HOID model 241 and, for each image frame, identifies the first-type region, the second-type region, and the relationship between the first-type region and the second-type region (Step S202).

Regarding each image frame of the video data, the analyzing unit 252 identifies the product identification information about the product covered in the first-type region and the personal identification information about the person covered in the second-type region (Step S203).

Subsequently, based on the transition in the relationship as identified from each image frame and based on the rule information 244, the analyzing unit 252 identifies the section of interest (Step S204). Then, the analyzing unit 252 updates the product information table 243 according to the relationship between the product identification information and the section of interest (Step S205).

Based on the product information table 243, the generating unit 253 generates product information in which the product identification information, the section of interest, and the headcount are held in a corresponding manner (Step S206). Then, the generating unit 253 outputs the product information to the display unit 230 for display purposes (Step S207).

Given below is the explanation about the effects achieved in the information processing device 200 according to the second embodiment. The information processing device 200 analyzes video data; and repeatedly performs the operations of identifying the person (customer) and identifying the first-type region, the second-type region, and the relationship. Moreover, based on the transition in the relationship and the rule information 244, the information processing device 200 identifies the section of interest of the product; generates, for each set of product identification information, product information in which the section of interest and the headcount of the persons who showed interest in that section of interest is held in a corresponding manner; and displays the product information in the display unit 230. As a result, evaluation can be performed about what section of the product was of interest to how many customers.

As explained above, the information processing device 200 identifies the transition in the relationship based on the HOID model 241; and identifies the section of interest of the product, which is covered in the first-type region, based on the transition in the relationship and the rule information 244. However, that is not the only possible case. Given below is the explanation of another set of operations by which the information processing device 200 identifies the section of interest.

The information processing device 200 analyzes an image of the second-type region as output from the HOID model 241, and generates skeletal frame information. For example, the information processing device 200 can generate skeletal frame information using a machine learning model that treats an image of a person as the input and outputs skeletal frame information. The machine learning model is a neural network (NN). The information processing device 200 identifies time-series skeletal frame information from the images of the second-type region included in the time-series image frames.

In the skeletal frame information, two-dimensional coordinates or three-dimensional coordinates are set with respect to a plurality of joints defined in a human body model.

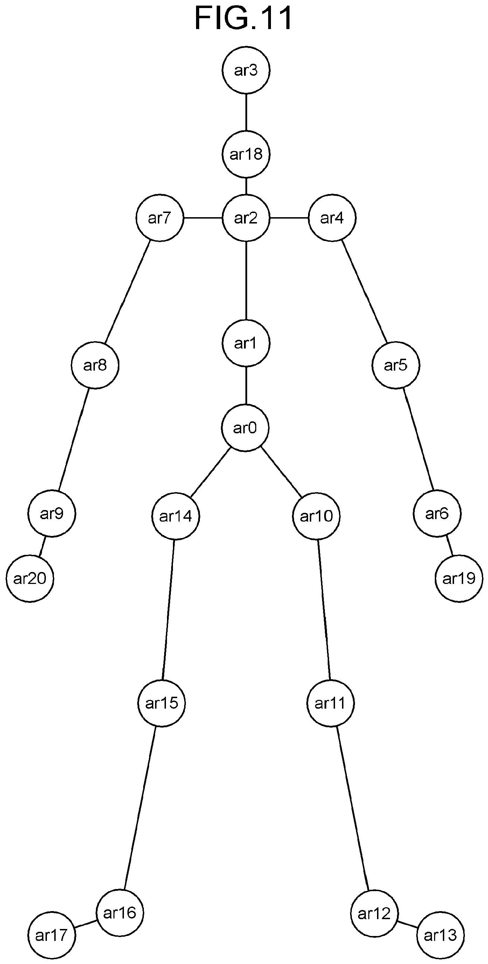

FIG. 11 is a diagram for explaining an exemplary human body model. As illustrated in FIG. 11, the human body model is defined by 21 joints from a joint ar0 to a joint ar20.

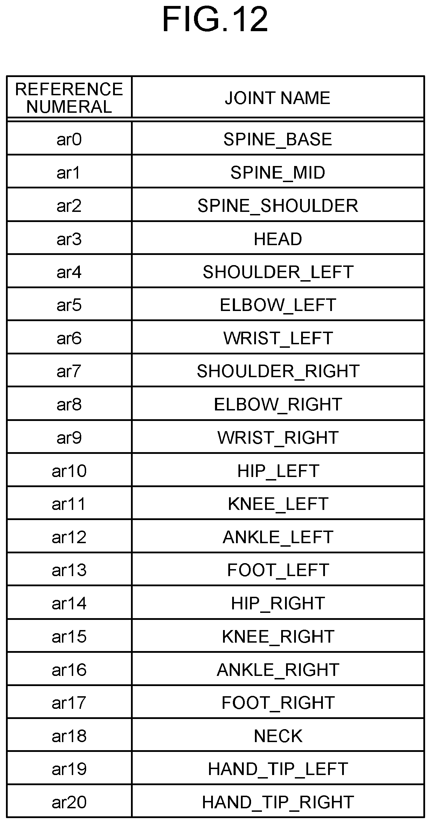

The relationship of the joints ar0 to ar20 illustrated in FIG. 11 with the joint names is as illustrated in FIG. 12. FIG. 12 is a diagram illustrating an example of the joint names. For example, the joint ar0 has a joint name "SPINE_BASE". Similarly, the joints ar1 to ar20 have the respective joint names as illustrated in FIG. 12. However, that explanation is not given herein.

Based on the skeletal frame information, the information processing device 200 identifies grasping identification information that enables identification of the manner in which the person covered in the second-type region grasps the product covered in the first-type region. For example, based on a "grasping identification table" in which the relationship between the skeletal frame information and the grasping identification information is defined, the information processing device 200 identifies the grasping identification information. The information processing device 200 identifies time-series grasping identification information based on the time-series skeletal frame information. Examples of the manner of grasping include grasping the product from the front side and grasping the product from the back side. The grasping identification information enables unique identification of such a manner of grasping. Meanwhile, the manner of grasping can also include other ways other than the examples given above.

After identifying the time-series grasping identification information, based on that time-series grasping identification information, the information processing device 200 identifies the type of action taken by the person. For example, based on an "action type table" in which the relationship between the time-series grasping identification information and the type of action is defined, the information processing device 200 identifies the type of action. Examples of the type of action include bringing the face closer to the product, looking at the sides of the product, and looking at the bottom of the product. Meanwhile, the type of action can also include other types of action other than the examples given above.

After identifying the type of action, the information processing device 200 identifies the section of interest based on the type of action. For example, based on a "section-of-interest table" in which the relationship between the type of action and the section of interest is defined, the information processing device 200 identifies the section of interest. Examples of the section of interest include "package design", "notification of raw materials", and "notification of price". Meanwhile, the section of interest can also include other sections of interest other than the examples given above.

As explained above, the information processing device 200 analyzes the images of the second-type region and generates time-series skeletal frame information, and then identifies the time-series grasping identification information based on the time-series skeletal frame information. Subsequently, based on the time-series grasping identification information, the information processing device 200 identifies the type of action and identifies the section of interest corresponding to the type of action. That is, the section of interest of the product can be identified based on the skeletal frame information. Once the section of interest is identified, in an identical manner to the operations explained in the second embodiment, the information processing device 200 updates that record in the product information table 243 which corresponds to the product identification information.

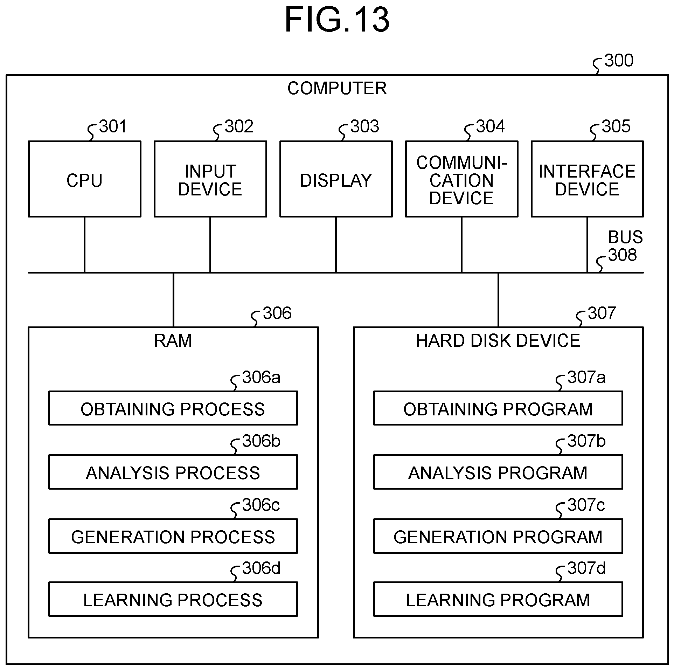

Given below is the explanation of an exemplary hardware configuration of a computer that implements identical functions to the information processing devices 100 and 200. FIG. 13 is a diagram illustrating an exemplary hardware configuration of a computer that implements identical functions to the information processing devices according to the embodiments.

As illustrated in FIG. 13, the computer 300 includes a CPU 301 that performs a variety of arithmetic processing; an input device 302 that receives input of data from the user; and a display 303. Moreover, the computer 300 includes a communication device 304 that communicates data with external devices via a wired network or a wireless network; and an interface device 305. Furthermore, the computer 300 includes a random access memory (RAM) 306 that is used to temporarily store a variety of information; and a hard disk device 307. The devices 301 to 307 are connected to each other by a bus 308.

The hard disk device 307 is used to store an obtaining program 307a, an analysis program 307b, a generation program 307c, and a learning program 307d. The CPU 301 reads the computer programs 307a to 307d and loads them in the RAM 306.

The obtaining program 307a functions as an obtaining process 306a. The analysis program 307b functions as an analysis process 306b. The generation program 307c functions as a generation process 306c. The learning program 307d functions as a learning process 306d.

The operations implemented by the obtaining process 306a correspond to the operations performed by the obtaining units 151 and 251. The operations implemented by the analysis process 306b correspond to the operations performs by the analyzing units 152 and 252. The operations implemented by the generation process 306c correspond to the operations performed by the generating units 153 and 253. The operations implemented by the learning process 306d correspond to the operations performed by the learning units 154 and 254.

Meanwhile, the computer programs 307a to 307d need not necessarily be stored in the hard disk device 307 from the beginning. For example, the computer programs 307a to 307d can be stored in a "portable physical medium" such as a flexible disk (FD), a compact disc read only memory (CD-ROM), a digital versatile disc (DVD), a magnetooptical disk, or an IC card that is insertable in the computer 300. Then, the computer 300 can read the computer programs 307a to 307d and execute them.

In this way, it becomes possible to identify the customer evaluation about a product.

## Claims

1. An information processing program that causes a computer (100,200) to execute a process comprising:
obtaining a video in which inside of a store is captured;
analyzing the obtained video;
identifying, based on a result of the analyzing, a first-type region that covers a product placed inside the store captured in the video, a second-type region that covers a person targeted for selling the product inside the store captured in the video, and a relationship that recognizes interaction between the first-type region and the second-type region; and
associating the identified relationship to the product covered in the first-type region.

2. The information processing program according to claim 1, wherein the process further includes:
first analyzing the video;
identifying, based on a result of the first analyzing, a customer captured in the video;
second analyzing the video in which the identified customer is captured;
identifying, in a repeated manner, based on a result of the second analyzing, a first-type region that covers a product placed inside a store captured in the video, a second-type region that covers a person targeted for selling the product inside the store captured in the video, and a relationship that recognizes interaction between the first-type region and the second-type region;
counting, based on the identified relationship, type-by-type count of the identified relationship;
generating, for each product, product information in which the type-by-type count of the relationship and the product covered in the first-type region are held in a corresponding manner; and
outputting the generated product information to the display device.

3. The information processing program according to claim 1, wherein the process further includes:
first analyzing the video;
identifying, based on a result of the first analyzing, a customer captured in the video;
second analyzing the video in which the identified customer is captured;
identifying, in a repeated manner, based on a result of the second analyzing, a first-type region that covers a product placed inside a store captured in the video, a second-type region that covers a person targeted for selling the product inside the store captured in the video, and a relationship that recognizes interaction between the first-type region and the second-type region;
counting, based on the identified relationship, time period taken for a particular relationship to be established from among a plurality of relationships;
generating, for each product, product information in which the time period taken for the particular relationship to be established and the product covered in the first-type region are held in a corresponding manner; and
displaying the generated product information in a display device.

4. The information processing program according to claim 1, wherein the process further includes:
identifying, based on the identified relationship and a rule which is set in advance, a section of interest of the product that attracted interest of the person;
registering, in a storage, information in which the identified section of interest and a product covered in the first-type region are held in a corresponding manner;
generating, based on information registered in the storage, for each product, product information in which the section of interest and headcount of persons who showed interest in the section of interest are held in a corresponding manner; and
outputting the generated product information to a display device.

5. The information processing program according to claim 1, wherein the process further includes:
first analyzing an image of the second-type region;
generating, based on a result of the first analyzing, skeletal frame information of the person;
identifying, based on the generated skeletal frame information, manner of grasping a product, which is covered in the first-type region, by a person covered in the second-type region;
identifying, based on the identified manner of grasping, whether the person took an action of showing interest in design of the product or took an action of showing interest in raw materials of the product;
identifying, based on the identified action, section of interest of the product that attracted interest of the person; and
registering, in a storage, information in which the identified section of interest and the product are held in a corresponding manner.

6. The information processing program according to claim 1, wherein
the identifying inputs the video to a machine learning model and identifies the first-type region, the second-type region, and the relationship, and
the machine learning model is a HOID (Human Object Interaction Detection) model in which machine learning is implemented in such a way that
first-type region information that indicates a first-type class indicating a person targeted for selling a product and indicates a region in which the person appears,
second-type region information that indicates a second-type class indicating an object, which includes a product, and indicates a region in which the object appears, and
interaction between the first-type class and the second-type class
are identified.

7. An information processing method implemented in a computer (100,200), comprising:
obtaining a video in which inside of a store is captured;
analyzing the obtained video;
identifying, based on a result of the analyzing, a first-type region that covers a product placed inside the store captured in the video, a second-type region that covers a person targeted for selling the product inside the store captured in the video, and a relationship that recognizes interaction between the first-type region and the second-type region; and
associating the identified relationship to the product covered in the first-type region.

8. An information processing device comprising a control unit (150) configured to:
obtain a video in which inside of a store is captured;
identify, based on analyzing the obtained video, a first-type region that covers a product placed inside the store captured in the video, a second-type region that covers a person targeted for selling the product inside the store captured in the video, and a relationship that recognizes interaction between the first-type region and the second-type region; and
associate the identified relationship to the product covered in the first-type region.

9. The information processing device according to claim 8, wherein the control unit(150) is further configured to:
identify, based on analyzing the video, a customer captured in the video;
identify, in a repeated manner, by analyzing the video in which the identified customer is captured, a first-type region that covers a product placed inside a store captured in the video, a second-type region that covers a person targeted for selling the product inside the store captured in the video, and a relationship that recognizes interaction between the first-type region and the second-type region;
count, based on the identified relationship, type-by-type count of the identified relationship;
generate, for each product, product information in which the type-by-type count of the relationship and the product covered in the first-type region are held in a corresponding manner; and
output the generated product information to the display device.

10. The information processing device according to claim 8, wherein the control unit(150) is further configured to:
identify, based on analyzing the video, a customer captured in the video;
identify, in a repeated manner, based on analyzing the video in which the identified customer is captured, a first-type region that covers a product placed inside a store captured in the video, a second-type region that covers a person targeted for selling the product inside the store captured in the video, and a relationship that recognizes interaction between the first-type region and the second-type region;
count, based on the identified relationship, time period taken for a particular relationship to be established from among a plurality of relationships;
generate, for each product, product information in which the time period taken for the particular relationship to be established and the product covered in the first-type region are held in a corresponding manner; and
display the generated product information in a display device.

11. The information processing device according to claim 8, wherein the control unit(150) is further configured to:
identify, based on the identified relationship and a rule which is set in advance, a section of interest of the product that attracted interest of the person;
register, in a storage, information in which the identified section of interest and a product covered in the first-type region are held in a corresponding manner;
for each product, generate, based on information registered in the storage, product information in which the section of interest and headcount of persons who showed interest in the section of interest are held in a corresponding manner; and
output the generated product information to a display device.

12. The information processing device according to claim 8, wherein the control unit(150) is further configured to:
generate, based on analyzing an image of the second-type region, skeletal frame information of the person;
identify, based on the generated skeletal frame information, manner of grasping a product, which is covered in the first-type region, by a person covered in the second-type region;
identify, based on the identified manner of grasping, whether the person took an action of showing interest in design of the product or took an action of showing interest in raw materials of the product;
identify, based on the identified action, section of interest of the product that attracted interest of the person; and
register, in a storage, information in which the identified section of interest and the product are held in a corresponding manner.

13. The information processing device according to claim 8, wherein the control unit(150) is further configured to:
input the video to a machine learning model;
identify the first-type region, the second-type region, and the relationship, and
the machine learning model is a HOID (Human Object Interaction Detection) model in which machine learning is implemented in such a way that
first-type region information that indicates a first-type class indicating a person targeted for selling a product and indicates a region in which the person appears,
second-type region information that indicates a second-type class indicating an object, which includes a product, and indicates a region in which the object appears, and
interaction between the first-type class and the second-type class
are identified.
